# EUROPEAN PATENT APPLICATION

(11) **EP 4 831 968 A1**
(43) Date of publication of application: **28.10.2026**
(21) Application number: 23962179.0
(22) Date of filing: 20.12.2023
(51) Int. Cl.: G09B 29/00

(54) **INDEX DISPLAY SYSTEM, METHOD THEREOF, AND PROGRAM**

(71) Applicant: Katayama, Toshio, Tama-shi Tokyo 206-0015 (JP); Makita, Tsukasa, Tsukuba-shi Ibaraki 305-0818 (JP)
(72) Inventor: Katayama, Toshio, Tama-shi Tokyo 206-0015 (JP); Makita, Tsukasa, Tsukuba-shi Ibaraki 305-0818 (JP)
(74) Representative: TBK
(86) International application number: PCT/JP2023/045645
(87) International publication number: WO 2025/134258

(57) **Abstract**

[Summary]

[Problem to be solved]

To enable a mapping without damage of the relationship between an element and another element around the element, with reflexing the value proportionality of plural elements

[Means for solving the problem]

Value-based mapping system 1 equips particular territory-setting means 60 for setting particular territories which are the plural territories arranged in the setting ranges as ranges inserted by first boundaries next to each other and/or second boundaries next to each other, value-estimating means 70 for estimating a value of each territory included the particular territories based on the value of an element in the particular territories, rescaling ratio-calculating means 80 for calculating a basic rescaling ratio based on the territory included in the particular territories, and map-controlling means 90 for rescaling the setting ranges based on the basic rescaling ratio and mapping on the displaying means 91.

## Description

### [Technical field]

The present invention relates to a value-based mapping system, method and program thereof.

### [Technical background]

Conventionally, in a map in which elements such as plural countries or municipalities are arranged (for example, equal-area map, etc.), such plural elements are arranged as the size corresponding to the actual area of each of plural elements at the position corresponding to the positional relationship with another element.

For example, it is known that in case a value showing the situation of municipality as one example of an element (for example, population, college graduation rate, etc.) is presented with using an equal-area map, each municipality is presented by attaching the color corresponding to the value of each municipality. Further, cartogram is known as a map where the mapping area of a nation is in proportional to the value (for example, GDP (Gross Domestic Product), population, number of billionaires, etc.) showing the situation of the nation as an example of an element.

### [Summary of the invention]

### [Problem to be solved by the invention]

However, in case the difference of a value is presented by color, the color of a part having a large area forms the overall impression, which is sometimes far different from the impression based on the average of a value in the actual whole element. In addition, a slight change of an area which has small population proportion of is reflected big, on the other hand it is not easy to comprehend the situation of urban area which occupies majority of the population, of which many people are interested in the regional differences, and in which most of comments are concentrated. In order to improve such situation, intuitive rescaling of a map or supplement of enlarged view (for example, of urban area) is performed, but they cannot be distinguishable from one of which data are arbitrary processed and mapped.

Further, cartogram is suitable for showing the presence in contrast of other countries in the value of each country, but it is not usually used as a world map showing various activities. That is the reason why the usability as a map is lowered because the shape of each country is distorted and adjacency of countries to each other is hard to understand.

Therefore, the purpose of the present invention is to reflect the proportionality of the values of plural elements with considering the above problems, and at the same time to enable the presentation in which the relationship between an element and another element around the element.

### [Means to solve the problem]

In order to solve the above problem, value-based mapping system of the present invention provides the following means to solve the problem.
(1) A value-based mapping system, in which plural first boundaries, plural second boundaries which cross the first boundaries, and the territories surrounded by the first boundaries and the second boundaries are set, and which rescales the width between the first boundaries next to each other or between the second boundaries next to each other, based on the value regarding the elements, in the whole map showing the area where plural elements are arranged, equipping
   whole map-obtaining means for obtaining the whole map,
   value-obtaining means for obtaining the value of each of the plural elements,
   particular territory-setting means for setting particular territories which are the plural territories arranged in the setting ranges as the ranges inserted by the first boundaries next to each other and/or the second boundaries next to each other, in the whole map,
   value-estimating means for estimating the value in each territory included in the particular territories, based on the value of the element in the particular territory,
   rescaling ratio-calculating means for calculating a basic rescaling ratio based on the value of the territory in the particular territories and the territory included in the particular territory, and
   map-controlling means for mapping on the displaying means with rescaling the setting ranges based on the basic rescaling ratio.

In the composition of (1), the value-based mapping system equips whole map-obtaining means, value-obtaining means, particular territory-setting means, value-estimating means, rescaling ratio-calculating means, and map-controlling means, and in which plural first boundaries, plural second boundaries which cross the first boundaries, and territories surrounded by the first boundaries and the second boundaries are set, and which rescales the width between the first boundaries next to each other or between the second boundaries next to each other, based on the value regarding the elements in the whole map showing the area where plural elements are arranged,
the whole map-obtaining means obtains the whole map,
the value-obtaining means obtains value of each of plural elements, the particular territory-setting means sets the particular territories which are the plural territories arranged in the setting ranges as the ranges inserted by the first boundaries next to each other and/or the second boundaries next to each other, in the whole map,
the value-estimating means estimates the value in each territory included in the particular territories, based on the value of the element in the particular territories,
the rescaling ratio-calculating means calculates a rescaling ratio based on the value of the territory included in the particular territories and the territory included in the particular territories.
the map-controlling means rescales the setting ranges based on the basic rescaling ratio and maps on the displaying means.

According to the composition of (1), in the particular territories in which plural territories are arranged in the setting ranges as the ranges inserted by the first boundaries next to each other and/or second boundaries next to each other, the setting ranges where the particular territories are arranged are rescaled to be mapped on the displaying means, based on the basic rescaling ratio calculated based on the value in the particular territories and the territory included in the particular territories.

By the above, the setting ranges including the particular territories are rescaled as a whole, based on the basic rescaling ratio calculated based on the value of the plural territories existing between the first boundaries next to each other and/or the second boundaries next to each other and the territory included in the particular territories, so the rescaled presentation becomes possible without damage of the relationship between an element and another element around the element.

Therefore, the presentation without damage of the relationship between an element and another element around the element becomes possible with reflecting the value proportionality of plural elements.

(2) The value-based mapping system according to (1), is characterized by that, the rescaling ratio-calculating means calculates a corrected rescaling ratio based on the basic rescaling ratio, and the map-controlling means rescales the setting ranges based on the corrected rescaling ratio and maps it on the displaying means.

Wherein, for example, in case the size of a value is extremely big in one of plural territories existing between the first boundaries next to each other, the whole map may distort greatly.

According to the composition of (2), based on the corrected rescaling ratio calculated from the basic rescaling ratio which is the average of the values of plural territories existing between the first boundaries next to each other these plural territories are rescaled as a whole, so even such as in the above case the presentation rescaled with less damage of the relationship between an element and another element around the element becomes possible.

(3) The value-based mapping system according to (1) or (2) characterized by that the particular territory-setting means sets exception elements among the plural elements arranged in the setting ranges, and sets the particular territory excluded the exception elements.

Wherein, for example, in case the present invention is applied to a world map, the plural elements are sea and country and the whole map is the whole world map. Then, in case a value is population, population does not exist in the part of sea, so in case that sea is included in the setting ranges, compared to the case that sea is not included in the setting range, the basic rescaling ratio based on the average population value per area becomes lower and may be underestimated.

According to the composition of (3), for example, the basic rescaling ratio is calculated with excluding an element of which size of value is zero (0) and the setting ranges are rescaled based on this basic rescaling ratio, so it is possible to perform rescaling by which more correct comparison is possible.

(4) A method carried out by a value-based mapping system, in which plural first boundaries, plural second boundaries which cross the first boundaries, and the territories surrounded by the first boundaries and the second boundaries are set, and which rescales the width between the first boundaries next to each other or between the second boundaries next to each other, based on the value regarding the elements, in the whole map showing an area, comprising
step for obtaining the whole map,
step for obtaining the value of each of plural elements,
step for setting particular territories which are plural territories arranged in the setting ranges as the ranges inserted by the first boundaries next to each other and/or the second boundaries next to each other in the whole map,
step for estimating the value in each of the territories included in the particular territories, based on the value of the element in the particular territories,
step for calculating a basic rescaling ratio, based on the value of the territory in the particular territories and the territory included in the particular territories, and
step for rescaling the setting ranges based on the basic rescaling ratio and mapping it on the displaying means.

(5) A program characterized by making function a value-based mapping system, in which plural first boundaries, plural second boundaries which cross the first boundaries, and the territories surrounded by the first boundaries and the second boundaries are set, and which rescales the width between the first boundaries next to each other or between the second boundaries next to each other, based on the value regarding the elements, in the whole map showing an area where plural elements are arranged, as
means for obtaining the whole map,
means for obtaining the value of each of plural elements,
means for setting particular territories which are plural territories arranged in the setting ranges as the ranges inserted by the first boundaries next to each other and/or the second boundaries next to each other, in the whole map,
means for estimating the value in each of the territories included in the particular territories, based on the value of the element in the particular territories,
means for calculating a basic rescaling ratio, based on the value of the territory in the particular territories and the territory included in the particular territories, and
means for rescaling the setting ranges based on the basic rescaling ratio and mapping it on the displaying means.

According to the composition of (4) and (5), the present invention produces the same effect as the composition of (1).

### [Effect of the invention]

According to the present invention, a presentation without damage of the relationship between an element and another element around the element becomes possible with reflecting the value proportionality of plural elements.

### [Brief explanation of the figures]

[Figure 1]
   Figure illustrating the outline of a value-based mapping system of an embodiment of the present invention
[Figure 2]
   Figure showing the function configuration of a value-based mapping system of an embodiment of the present invention
[Figure 3]
   Figure illustrating specifically a process by rescaling ratio-calculating means of a value-based mapping system of an embodiment of the present invention
[Figure 4]
   Figure illustrating points to note on the two dimensional-rescaling of a value-based mapping system of an embodiment of the present invention
[Figure 5]
   Figure showing an example of whole map rescaled two-dimensionally by a value-based mapping system of an embodiment of the present invention
[Figure 6]
   Figure showing a flow of a value-based mapping process carried out by a value-based mapping system of an embodiment of the present invention

### [Embodiment for working the present invention]

Embodiments for working the present invention (hereafter referred to as "Embodiments" ) are explained in the following with referring to the attached figures. In the following figures the same number or symbol is attached to the same component through the whole explanation of the embodiments. However, the present invention can have various changes within the range of the claims without being limited by the embodiments.

### (Basic concept/ Basic configuration)

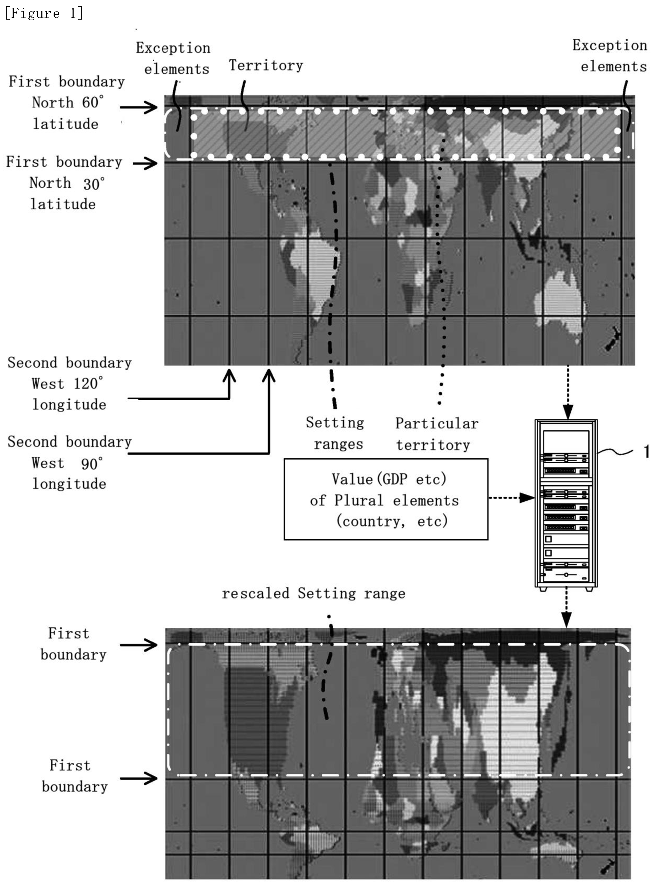

Figure 1 illustrates the outline of a value-based mapping system of an embodiment of the present invention. Value-based mapping system 1 rescales the width between the first boundaries next to each other or between the second boundaries next to each other, based on the value regarding the elements (for example, population, GDP, etc.), in the whole map (for example, world map, map of a country (map of Japan, etc.), etc.) showing the area (for example, world, a country (Japan, etc.), etc.) where plural first boundaries (for example, latitude line, etc.), plural second boundaries crossing the first boundaries (for example, longitude line, etc.), and the territories surrounded by the first boundaries and the second boundaries are set, and where plural elements (for example, country, municipality, etc.) are arranged.

Value-based mapping system 1, obtains a whole map as a standard (world map shown by cylindrical equal-area map projection shown in the upper section, in an example shown in figure 1), for example, based on an external server connected via network, internal memory means, or the input operation of the administrator of the value-based mapping system. Then, for cylindrical equal-area map projection boundaries positioned at the top and bottom edges are points (poles) in reality, but for value-based mapping system 1 they are handled as line segments according to the map. In the world map shown by cylindrical equal-area map projection shown in the upper section of figure 1, the polar regions of the earth are omitted.

Value-based mapping system 1 also obtains a value of each element shown in the whole map (for example, a numerical figure showing a population of each country), for example, based on an external server connected via network, internal memory means, or the input operation of the administrator of the value-based mapping system.

Next, value-based mapping system 1 sets plural first boundaries (latitude lines, etc.) and plural second boundaries (longitude lines, etc.) which cross the plural first boundaries. In an example shown in figure 1, value-based mapping system 1 obtains a world map as the whole map, sets a latitude of the world map (for example, latitude line of every 30 degree) as first boundaries which are arranged at a preset interval, and sets a longitude of the world map (for example, longitude line of every 30 degree) as second boundaries which are arranged at a preset interval. Here, in the example in figure 1, to understand easily, an example where first boundaries and second boundaries are latitude lines and longitude lines, respectively, at every 30 degree is explained, but first boundaries and second boundaries can be set arbitrarily. For example, latitude lines and longitude lines at every 1 degree can be set and can be arbitral lines set by users.

Next, value-based mapping system 1 sets a territory surrounded by first boundaries next to each other (for example, 60 degree North latitude and 30 degree North latitude) and second boundaries next to each other (120 degree West longitude and 90 degree West longitude).

Further, value-based mapping system 1 sets, in the whole map, a particular territories (the part marked with a diagonal line in the example shown in figure 1) which are plural territories arranged in the setting ranges as the ranges inserted by the first boundaries next to each other (for example, 60 degree North latitude line and 30 degree North latitude line). In the example shown in figure 1, value-based mapping system 1 sets the part where the territories arranged on both edges is excluded as exception elements among the plural territories arranged in 3, as a particular territory. Here, value-based mapping system 1 can set, among plural territories, the part where more than arbitrary range (for example, more than half) of the territory occupied by the sea or South Pole is excluded as the exception elements, as a particular territory. Further, value-based mapping system 1 can divide each territory proportionally to plural elements, allocate certain ratio of the territory to the exception elements according to the area ratio of the sea or South Pole related to the territory, and can set proportionally as the particular element. In this case, for example, if 10% of a territory is sea or South Pole, 90% is set as the particular territory.

Further, value-based mapping system 1 can estimate a value in each territory (one (1) cell) included in the particular territories, based on the value (for example, population, etc.) of the element in the particular territories (for example, country, etc.).

Then, value-based mapping system 1 calculates a basic rescaling ratio based on the value of a territory of the particular territories and the territory included in the particular territories. Specifically, value-based mapping system 1 calculates a basic rescaling ratio, for example, which is obtained by dividing the total of values of a territory in the particular territories by the area or number of a territory included in the particular territories. But, the basic rescaling ratio may be calculated using an arbitral formula, if the feature of a value of the particular territories in the whole map is presented as a numerical figure.

Further, value-based mapping system 1 rescales setting ranges (between the first boundaries next to each other (for example, 60 degree North latitude and 30 degree North latitude)) in the South-North direction (in the direction in which the first boundaries next to each other move closer together or further apart), based on the calculated basic rescaling ratio. Thus, the world map shown in the upper section of figure 1 becomes the world map in the bottom section.

According to such value-based mapping system 1, the average of values of plural territories existing between first boundaries next to each other is handled as the basic rescaling ratio and based on this basic rescaling ratio, these plural territories are rescaled as a whole, so the rescaled presentation becomes possible without damage of the relationship between an element (in an example shown in figure 1, for example, North America included in the setting ranges) and another element around the element (in an example shown in figure 1, for example, South America next to North America included in the setting ranges). Thus, the presentation without damage of the relationship of an element and another element around the element, with reflecting the value proportionality of plural elements becomes possible.

### (Function configuration)

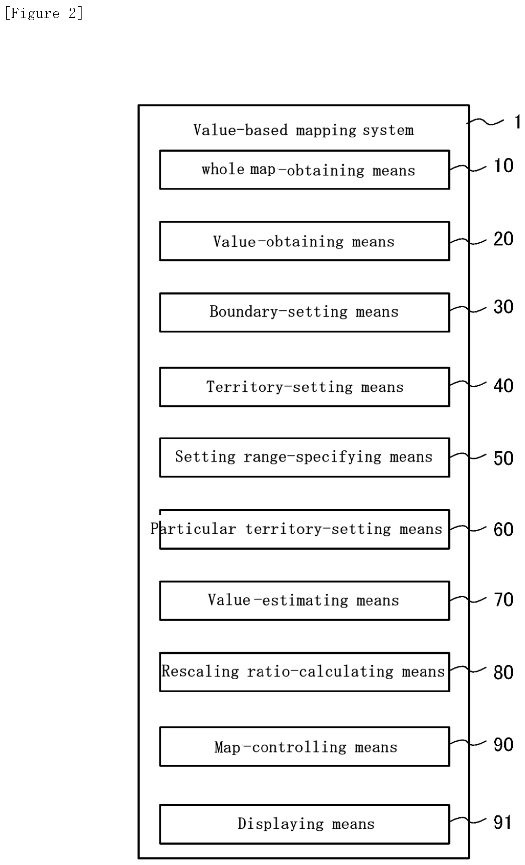

Figure 2 shows the function configuration of a value-based mapping system of an embodiment of the present invention.

Value-based mapping system 1 equips whole map-obtaining means 10, value-obtaining means 20, boundary-setting means 30, territory-setting means 40, setting range-specifying means 50, particular territory-setting means 60, value-estimating means 70, rescaling ratio-calculating means 80, map-controlling means 90, and displaying means 91.

Whole map-obtaining means 10 obtains a whole map (in an example shown in figure 1, the world map shown by cylindrical equal-area map projection shown in upper section) as a standard, for example, from an external server connected via network, from an internal memory means, or based on the input operation of the administrator of value-based mapping system 1.

In the present embodiment, "whole map" means an image information which is loaded into an ordinary computer and displayable on a displaying means such as a display. Also, in value-based mapping system 1, a map obtained as a whole map can be a map shown in arbitral projection without limitation to a map shown by cylindrical equal-area map projection. Also, in an example shown in figure 1, the whole map is world map, but not limited to it and it can be an image information of an arbitral figure where plural elements are arranged.

Value-obtaining means 20 obtains a value (population number, GDP, etc.) of each of plural elements (for example, country, municipality, etc.), for example, from an external server connected via network, from an internal memory means, or based on the input operation of the administrator of value-based mapping system 1.

Boundary-setting means 30 sets plural first boundaries arranged at preset interval (for example, latitude lines at every 30 degree, etc.) and second boundary crossing the first boundaries (for example, longitude lines at every 30 degree, etc.), in the whole map obtained by whole map-obtaining means, for example, based on an input operation of the administrator of value-based mapping system 1.

Here, boundary-setting means 30 may set latitude lines with arbitral interval such as 1 degree, etc., as first boundaries and set longitude lines with arbitral interval, such as 1 degree, etc., as second boundaries, and also may set longitude lines as first boundaries and latitude lines as second boundaries. Further, first boundaries and second boundaries are not limited to be shown as linear shape, for example, in case the whole map obtained by whole map-obtaining means 10 is mapped as a globe (non-Euclidean two-dimensional map), it may be shown as in arc shape. Also, intervals preset is not limited to at even intervals, it may be different distance at each interval of boundaries, and it also may be different depending on the same position as the longitude lines of globe map.

Further, territory-setting means 40, for example, if lines crossing to each other (latitude lines and longitude lines) are included in the whole map such as a world map, may set these automatically in first boundary and second boundary.

Territory-setting means 40, for example, sets a territory (one (1) cell) surrounded by first boundaries next to each other (for example, 60 degree North latitude and 30 degree North latitude) and second boundaries next to each other (for example, 120 degree West longitude and 90 degree West longitude), for example, based on the input operation of the administrator of value-based mapping system 1.

Setting range-specifying means 50 specifies the ranges inserted by first boundaries next to each other (for example, 60 degree North latitude and 30 degree North latitude) as the setting ranges. Setting range-specifying means 50 may set ranges inserted by first boundaries next to each other as each setting the ranges, as the whole, in the whole map. It may also, for example, specify only the ranges inserted by first boundaries next to each other, based on the input operation of the administrator of value-based mapping system 1.

Particular territory-setting means 60 sets a particular territory as plural territories arranged in the setting ranges. Also, particular territory-setting means 60 sets exception elements (for example, sea, South Pole, etc.) among plural elements arranged in the setting ranges, and sets a particular territory in which the exception elements are excluded (territory in which land is included). Here, particular territory-setting means 60 may set all of one territory as exception elements, and it may set only a part of one territory as exception elements (it may set a particular territory where exception elements in each territory are proportionally excluded).

Value-estimating means 70 estimates a value of each territory included in a particular territory, based on the value of an element in the particular territory.

Here, there is a case that plural elements are included in one territory. In such a case, value-estimating means 70 estimates a value of the territory, based on the value of the element having the largest area, among plural elements included in the territory. Also, value-estimating means 70, in case plural elements are included in one territory and there is an element which exists only in the territory (for example, smaller country or district, etc., than the area having one (1) cell), it estimates a value of the territory based on the value of the element which exists only in the territory. Accordingly, it becomes possible to rescale the setting ranges with also reflecting the value of the element which has smaller area than one territory.

Here, value-estimating means 70 may estimate the value of the territory, based on the value allotted according to the proper ratio of the area, etc., of plural elements, without limited to the above example, in case plural elements are included in one territory.

Resealing ratio-calculating means 80 calculates a basic rescaling ratio, based on the value of territory in the particular territory set by particular territory-setting means 60 and the territory included in the particular territory. Specifically, rescaling ratio-calculating means 80 calculates the basic rescaling ratio which the total of values of the territory in the particular territory is divided by the area or number of the territory included in the particular territory.

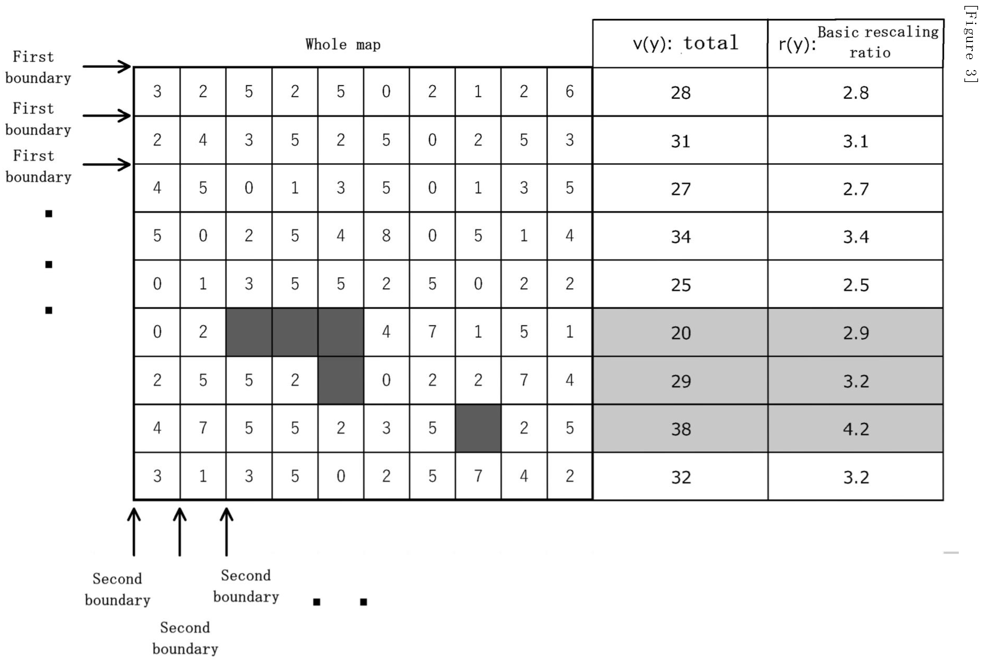

Figure 3 illustrates concretely the process by the rescaling ratio-calculating means 80 of value-based mapping system of an embodiment of the present invention. In figure 3, in the whole map, an element is omitted, only plural first boundaries and plural second boundaries are shown, and the numerical figure of the value of the territory is filled in the territories (one (1) cell) surrounded by first boundaries next to each other and second boundaries next to each other. Here, in the example shown in figure 3, the area of each territory is all equal, and dividing by the number of the territory enables to comprehend the degree of distribution of each value per area. Also, in the whole map of figure 3, the territory which is shown in gray color and where the value is not filled shows exception elements (sea, etc.) set by particular territory-setting means 60.

In the example in figure 3, in the whole map, ten (10) territories are arranged in the horizontal direction (one (1) line), and nine (9) territories are arranged in the vertical direction (one (1) line).

Rescaling ratio-calculating means 80, for example, in case setting range-specifying means 50 sets the top line as the setting range and particular territory-setting means 60 sets all (ten (10)) of the territories (one (1) cell) of this setting range as the particular territory, calculates the total of values (v(y):28) in the territory in this particular territory (ten (10) unshaded meshes). Then, rescaling ratio-calculating means calculates the basic rescaling ratio (r(y):2.8) by dividing this total (v(y):28) by the number (ten (10)) of the territory included in the particular territory.

Also, for example, in case setting range-specifying means 50 sets the fourth line from the bottom as the setting range, particular territory-specifying means 60 sets the three territories shown in gray color among the territory of this setting range as exception elements, and sets the territory where these exception elements are excluded (10 - 3 = seven (7)) as a particular territory, rescaling ratio-calculating means 80 calculates total of values (v(y):20) of the territory in this particular territory (seven (7) unshaded meshes). Then, rescaling ratio-calculating means 80 calculates the basic rescaling ratio (r(y):2.9) by dividing this total (v(y):20) by the number of the territories (seven (7)) included in the particular territory.

Also, in the whole map, in case the distribution of value v is skewed, in many setting ranges the total of the value v(y) ≒ 0, so the basic rescaling ratio becomes r(y) ≒ 0 (the width is almost 0) and it is thought to be not proper as a large-scale map.

In such a case, rescaling ratio-calculating means 80 calculates a corrected rescaling ratio R(y) based on the basic rescaling ratio r(y).

An example of corrected rescaling ratio R(y) is considered to be in the following.
a) $R \left(y\right) = {\left(r \left(y\right)\right)}^{c} ,$ where 0≦c≦
   C=0 : not considered values at all (area-equal map)
   C=1 : r(y) is used as it is
b) $R \left(y\right) = \left(1-c\right) + c \times r \left(y\right) .$ where 0≦c≦1
   c=0: not considered values at all (area-equal map)
   c=1: r(y) is used as it is.

In the above a), in case the distribution of value v is extremely skewed, it is hard to handle. In the above b), it is easy to examine the correction. Therefore, it is considered that in many cases the correction of a) is sufficient for the values with high generality such as GDP or population, and it is considered that b) may be proper for the values such as mineral resources which are concentrated in local area.
c) $R \left(y\right) = r \left(y\right) ,$ where in case r(y)<1, R(y)=1 (world average)

The part of latitude y (longitude x) where value v concentrates expands, but equal-area presentation is maintained in another district. Here, in case of r(y) ≧ 1, it is possible that the above a) or b) is adopted. In this case, the map zooms on the selected latitudes (or longitudes), instead of preparing separately enlarged views of main districts of world map.
d) $R \left(y\right) = max \left(y, r \left(x, y\right)\right)$

r(x, y) is an example of basic rescaling ratio which shows v (the size of the value per area in latitude x, longitude y (1 degree x 1 degree)) is how many times as big as the world average.

max (y, r (x, y)) is the maximum of r(x.y) in a latitude y.

Also, it is necessary to avoid the whole be distorted due to the local situation. Typical assumed case: (In particular, at a longitude where land area is small,) in case a narrow area having extremely high value v and r(x) is high such as 100 at the longitude x, the longitude occupies one fourth of the whole map and it becomes distorted.

In such a case, if c is made small using a) or b) for a corrected rescaling ratio R(y), the value-responsiveness also lowers collaterally in a wide district and local correction end up being excessive.

Therefore, not to spread the local situation such above to the whole, rescaling ratio-calculating means 80 may perform the following process.

First, the lowest area is set for all the elements (country, district) as allocation targets of value v. For example, longitude 1 degree x latitude 1 degree is allocated to any element (country, district) in the whole map (map). Then, in any longitude x or latitude y a corrected scaling ratio R(y) is assumed with adding a certain virtual additional area d to the land area. Accordingly, the corrected rescaling ratio R(y) becomes the following. $R \left(y\right) = v \left(y\right) / \left(s \left(y\right)+d\right)$

Now, a case is assumed that, in the East and West areas of which area is similar, the East and West areas are the same in population density, while 99% of the West area is sea and 1% land and 100% of the East area is land.

In such a case, if proportional mapping as an value of population is performed, the mapping width of the West area is one hundredth of the East area. But, if so, the land of the West is further 1%, so it is one ten-thousandth of mapping area of the land of the East area.

To correct this, rescaling ratio-calculating means 80 may set only land as the particular territories and, as the ratio of particular territories of the East area is one hundredth, it makes the widths of West and East the same by multiplying by the reciprocal. Accordingly, in case plural elements are included in one territory (for example, for a mesh map used by a local government, etc., lake or marsh and sea or river, adjacent municipal area are included in the mesh), damage of value proportionality of plural elements is prevented in the rescaled presentation based on the difference of the area of element.

Also, for example, in case first boundaries and second boundaries are considered as latitude lines or longitude lines, the area of territory consisting of longitude 1 degree x latitude 1 degree is different depending on the latitude. In such a case rescaling ratio-calculating means 80 makes correction with considering the difference of the areas of each territory included in the particular territory and combines the number of territories included in the particular territory.

Also, the area in the whole map may be arbitrarily rescaled. In this case rescaling ratio-calculating means 80 calculates a rescaling ratio based on a correction corresponding to the value of the territory included in the particular territories. Namely, for value-based mapping system 1 the concept of equal-area map or area is not inevitable.

Here, for the illustration of the present embodiment, an example where boundary-setting means 30 sets first boundary as latitude y is explained, but without limited to this, boundary-setting means 30 may set first boundary as longitude x.

Back to figure 2, map-controlling means 90, for the whole map (for example, world map, a map of a country (map of Japan, etc.), etc.), rescales the setting ranges set by setting range-specifying means 50, based on the basic rescaling ratio r(y) or corrected rescaling ratio R(y), which rescaling ratio-calculating means 80 calculates, and maps it on displaying means 91 (for example, display, monitor, etc.).

As above, an example where the setting ranges as the ranges inserted by first boundaries (latitude y) next to each other (one-dimensional scaling) are explained. It is desirable that such an example is applied to a case where the distribution of the numerical figures of the values in the whole map has remarkably deep relationship with first boundary (latitude y) than second boundary (longitude x). Specifically, in case the whole map is a world map and a value is one related to economy, the economic activity is concentrated in temperate and cold region of mid-to-high latitude, so it is desirable to apply an example where the setting ranges as the ranges inserted by first boundaries (longitude y).

On the other hand, in case the distribution of the numerical numbers of values in the whole map has deep relationship not only with first boundary (latitude y) but also with second boundary (longitude x), more delicate value considering map is possible by performing two-dimensional rescaling with using both first boundary (latitude y) and second boundary (longitude y).

### (Two-dimensional rescaling)

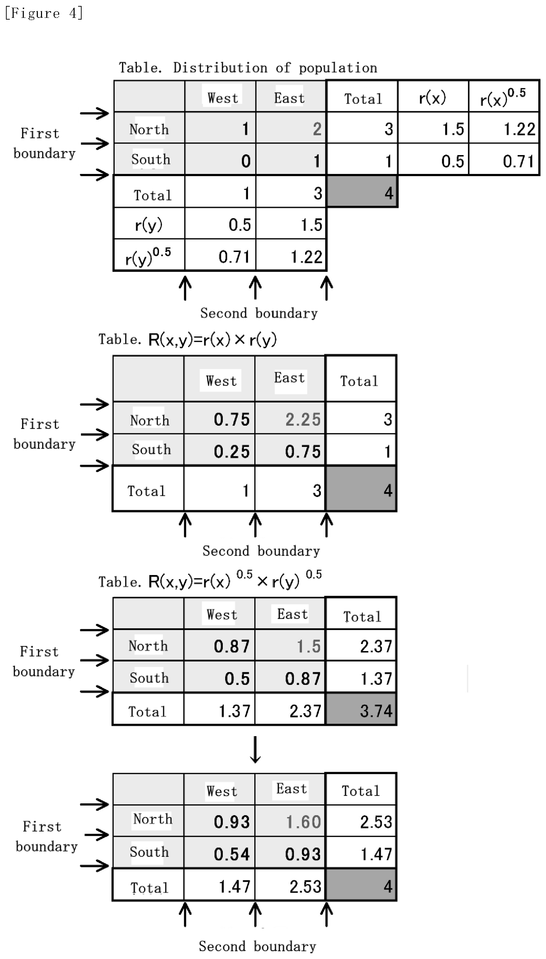

Figure 4 illustrates points to note in two-dimensional rescaling of value-based mapping system of an embodiment of the present invention.

For the example in Figure 4, it is understood as comparable land exists in the four regions of South/North hemisphere x East/West hemisphere and the population of the region is value v.

First, suppose R=r, as shown in table R(x, y)=r(x) x r(y), the mapping ratio of North × East (2.25/4.00) exceeds actual distribution v (2.00/4.00). This is why the effect of expansion-mapping in the direction of North and East with high distribution v is overlapped. In some cases such mapping may not be proper, in case a mild mapping having a little deviation with daily used map is aimed.

In such a case it is preferable to make the rescaling ratio mild with R=r^{c} and 0<c<1. A mild mapping having a little deviation with daily used map is possible, for example, as in Table. R(x, y)=r(x)^{0.5} x r(y)^{0.5} c=0. 5. Also, as a result of calculation, it can be a case that the whole mapping area shrinks from 4.0 to 3.74 without a correction shown in the figure. In this case (first one of Table. R(x, y) =r (x)^{0.5} x r (y)^{0.5}), it may be corrected as a whole to approximate to 4.0 (second one of Table. R(x, y) =r (x)^{0.5} x r (y)^{0.5}).

According to the above consideration, in general c<1 is preferable for multidimensional consideration mapping. In particular, the higher multi-dimension and correlation between dimensions, the lower c should be. Also, c may take on multiple values, for example, the exponent of r(x) to c1, and the exponent of r(y) to c2.

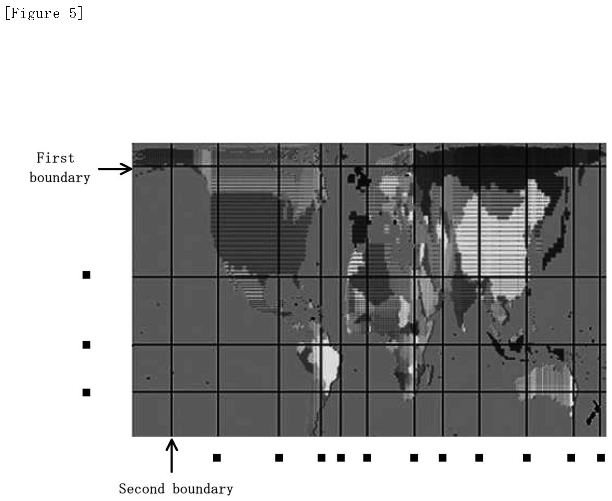

Figure 5 illustrates an example of the whole mapping two-dimensionally rescaled by value-based mapping system of an embodiment of the present invention.

In the example shown in Figure 5, whole map-obtaining means 10 obtains a world map shown by cylindrical equal-area map projection as a whole map, value-obtaining means 20 obtains population number as a value, and boundary-setting means 30 sets first boundary as latitude at every 30 degree and boundary as longitude at every 30 degree.

Then, in the example shown in figure 5, rescaling ratio-calculating means 80 calculated corrected rescaling ratio R(x, y) by the formula below. $R \left(x, y\right) = r {\left(x\right)}^{c} \times r {\left(y\right)}^{c}$ C=0.5

Based on rescaling with such a corrected rescaling ratio R(x, y), the whole map (world map) is easy to use and it excels in naturalness, compared to the map which extremely emphasizes the distribution of values (population), for example, as a cartogram.

Also, compared to a map (equal-area map projection), it maps economically developed districts bigger, so it is convenient for handling economic topics. Also, depending on the increase (decrease) of the magnitude of c, it is possible to raise (lower) the reflection of values to some degree.

The function configuration of the above present system is just one example, so one function block (database and function-processing unit) may be divided or plural function blocks may be integrated into and be composed of one function block. CPU (Central Processing Unit) built in the apparatus or terminal reads out the computer program (for example, application software, etc., which make CPU to carry out core software or the above various processes) installed in memory device such as ROM (Read Only Memory), flash memory, SSD (Solid State Drive), or hard disk, etc., and then each function-processing unit is realized by the computer program carried out by CPU. Namely, each function-processing unit is realized by that this computer program reads and writes necessary data such as table, etc., from the memory region on the database (DB: Data Base) or memory installed in the memory device, depending on the case, controls relating hardware (for example, input-output device, display device, communication interface device). The Database (DB) of an embodiment of the present invention may be a commercial database, but it also means aggregate of merely tables or files and the internal structure of database itself does not matter.

### (Processing flow)

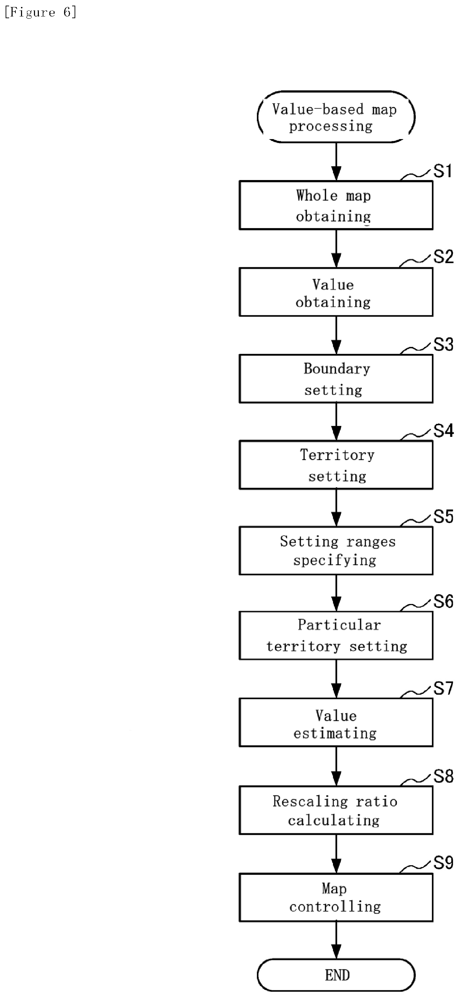

Figure 6 illustrates value-based map-processing flow carried out by value-based mapping system of an embodiment of the present invention.

On step S1, whole map-obtaining means 10 obtains a whole map as the standard (in the example shown in figure 1, the world map shown in the upper section), for example, from an external server connected vis network, from an internal memory means, or based on the input operation of the administrator of value-based mapping system 1.

On step S2, value-obtaining means 20 obtains a value (population number, GDP, etc.) of each of plural elements (for example, country, municipality, etc.), for example, from an external server connected vis network, from an internal memory means, or based on the input operation of the administrator of value-based mapping system 1.

On step S3, boundary-setting means 30, for example, sets plural boundaries arranged at the preset interval, in the whole map obtained by whole map-obtaining means 10 on step S1, based on the input operation of the administrator of value-based mapping system 1.

On step S4, territory-setting means 40, for example, sets the territories (one (1) cell) surrounded by first boundaries next to each other and second boundaries next to each other among plural first boundaries and second boundaries set by territory-setting means 30 on step S3, based on the input operation of the administrator of value-based mapping system 1.

On step S5, setting range-specifying means 50 specifies ranges inserted by first boundaries next to each other set by boundary-setting means 30 on step S4, as the setting ranges.

On step S6, particular territory-setting means 60 sets particular territories, which are the ranges inserted by first boundary next to each other and/or second boundary next to each other set by boundary-setting means 30 on step S3, and which are plural territories arranged in the setting ranges specified by setting range-specifying means 50 on step S5.

On step S7, value-estimating means 70 estimates the value in each of the territories included in the particular territories, based on the value of the element in the particular territories which particular territory-setting means 60 sets, with referring to the value which value-obtaining means 20 obtains on step S2.

On step S8, rescaling ratio-calculating means 80 calculates a corrected rescaling ratio, based on the values of the territories set by particular territory-setting means 60 on step S6 and the territories included in the particular territory set by particular territory-setting means 60 on step S6, with referring to the value of each territory estimated by value-estimating means 70 on step S7. Also, on the present step, rescaling ratio-calculating means 80 may calculate a corrected rescaling ratio, based on the basic rescaling ratio.

On step S9, map-controlling means 90, for the whole map obtained by whole map-obtaining means 10 on step S1, rescales the setting ranges set by setting range-specifying means 50 on step S5, based on the basic rescaling ratio or the corrected rescaling ratio calculated by rescaling ratio-calculating means 80 on step S8 and map on displaying means 91.

As above, according to value-based mapping system 1, in the particular territories which are the plural territories arranged in the setting ranges as the ranges inserted by first boundaries next to each other and/or second boundaries next to each other, based on the value of a territory in the particular territory and the basic rescaling ratio calculated based on a territory included in the particular territory, the setting ranges where the particular territory is arranged are rescaled and mapped on displaying-means 91. Accordingly, based on the value of plural territories existing between first boundaries next to each other and/or second boundaries next to each other, and the rescaling ratio calculated based on a territory included in the particular territories, the setting ranges including the particular territory are rescaled as a whole, so the rescaled presentation becomes possible without damage of the relationship of an element and another element around the element.

Also, according to value-based mapping system 1, based on the corrected rescaling ratio calculated from the basic rescaling ratio which is the average of values of plural territories existing between first boundaries next to each other, these plural territories are rescaled, so in such the above case rescaled presentation becomes possible without damage of the relationship of an element and another element around the element.

Also, according to value-based mapping system 1, a basic rescaling ratio is calculated with excluding the element of which the size of value is zero (0), and the setting ranges are rescaled based on the basic rescaling ratio, so rescaling which enables more exact comparison becomes possible.

As above, the present invention is explained with using the working embodiments, but not limited within the range of the description of the above working embodiments.

In the above description, mainly value-based mapping in two-dimension (plane surface, curved surface) is described, but value-based mapping in three or more-dimension such as a part of outer space, or three-dimensional topographical mapping including high and low in a relatively narrow district, etc., can be thought.

The three-dimensional historic map where time and district are rescaled as a value of population or economic size using time × world map can be also thought. In the above case, it is natural to add boundary such as third boundary. Also, it can be thought that mapping time itself is rescaled in a movie.

Further, various high-dimensional data set can be thought other than real time space. If the distribution is numerical and spacious, value-considering mapping can be thought in the "space." As a result, an efficient mapping where space is spared at an important part is realized based on data-based evidence.

It is obvious for those skilled in the art that various changes and improvements as above can be added to the working embodiments of the present invention. Also, it is also obvious from the description of the claims that the embodiments which such changes and improvements are add to are also included in the technical scope of the present invention. Further, in the working embodiments value-based mapping system is explained as the invention of product of the present invention, but it can be understood that the method for carrying out by the value-based mapping system of the present invention or the invention of program which make the value-based mapping system function as various means.

### [Explanation of signs]

- 1: value-based mapping system
- 10: whole map-obtaining means
- 20: value-obtaining means
- 30: boundary-setting means
- 40: territory-setting means
- 50: setting range-specifying means
- 60: particular territory-setting means
- 70: value-estimating means
- 80: rescaling ratio-calculating means
- 90: map-control ling means
- 91: displaying means

## Claims

1. A value-based mapping system, in which plural first boundaries, plural second boundaries which cross the first boundaries, and the territories surrounded by the first boundaries and the second boundaries are set, and which rescales the width between the first boundaries next to each other or between the second boundaries next to each other, based on the value regarding the elements, in the whole map showing the area where plural elements are arranged, equipping whole map-obtaining means for obtaining the whole map,
value-obtaining means for obtaining the value of each of the plural elements,
particular territory-setting means for setting particular territories which are the plural territories arranged in the settings ranges as the ranges inserted by the first boundaries next to each other and/or the second boundaries next to each other in the whole map,
value-estimating means for estimating the value in each territory included in the particular territories, based on the value of the element in the particular territories,
rescaling ratio-calculating means for calculating a basic scaling ratio, based on the value of the territory in the particular territories and the territory included in the particular territories, and
map-controlling means for mapping in the displaying means with rescaling the setting ranges based on the basic rescaling ratio.

2. The value-based mapping system according to claim 1, wherein
the rescaling ratio-calculating means calculates a corrected rescaling ratio based on the basic rescaling ratio, and
the map-controlling means rescales the setting ranges based on the corrected rescaling ratio and maps on the displaying means.

3. The value-based mapping system according to claim 1 or 2, wherein
the particular territory-setting means sets exception elements among the plural elements arranged in the setting ranges, and sets the particular territory of which exception elements are excluded.

4. A method carried out by value-based mapping system in which plural first boundaries, plural second boundaries which cross the first boundaries, and the territories surrounded by the first boundaries and the second boundaries are set, and which rescales the width between first boundaries next to each other or between second boundaries next to each other, based on the value regarding the elements, in the whole map showing an area where plural elements are arranged, comprising
step for obtaining the whole map,
step for obtaining the value of each of plural elements,
step for setting particular territories which are plural territories arranged in the setting ranges which are the ranges inserted by the first boundaries next to each other and/or the second boundaries next to each other, in the whole map,
step for estimating the value in each of the territories included in the particular territories, based on the value of the element in the particular territories,
step for calculating a basic rescaling ratio, based on the value of the territory in the particular territories and the territory included in the particular territories, and
step for rescaling the setting ranges based on the basic rescaling ratio and mapping it on the displaying means.

5. A program **characterized by** making function an value-based mapping system in which plural first boundaries, plural second boundaries which cross the first boundaries, and the territories surrounded by the first boundaries and the second boundaries are set, which rescales the width between the first boundaries next to each other or between the second boundaries next to each other, based on the value regarding the elements, in the whole map showing an area where plural elements are arranged, as
means for obtaining the whole map,
means for obtaining the value of each of plural elements,
means for setting particular territories which is plural territories arranged in the setting ranges which are the ranges inserted by the first boundaries next to each other and/or the second boundaries next to each other, in the whole map,
means for estimating the value in each of the territories included in the particular territories, based on the value of the element in the particular territories,
means for calculating a basic rescaling ratio, based on the value of the territory in the particular territories and the territory included in the particular territories, and
means for rescaling the setting ranges based on the basic rescaling ratio and mapping it on the displaying means.
